(19) Europäisches Patentamt
European Patent Office
Office européen des brevets

(11) **EP 0 949 118 A2**

(12) **EUROPÄISCHE PATENTANMELDUNG**

(43) Veröffentlichungstag:
**13.10.1999 Patentblatt 1999/41**

(51) Int. Cl.$^6$: **B60Q 1/115**, B60Q 1/14

(21) Anmeldenummer: 99105575.7

(22) Anmeldetag: 18.03.1999

(84) Benannte Vertragsstaaten:
AT BE CH CY DE DK ES FI FR GB GR IE IT LI LU MC NL PT SE
Benannte Erstreckungsstaaten:
AL LT LV MK RO SI

(30) Priorität: 09.04.1998 DE 19815985

(71) Anmelder: **ROBERT BOSCH GMBH**
**70442 Stuttgart (DE)**

(72) Erfinder:
• **Cochard, Roland**
**1110 Morges (CH)**
• **Lopez, Eladio**
**1602 La Croix (CH)**

(54) **Einrichtung zur Einstellung der Richtung des von wenigstens einem Scheinwerfer eines Fahrzeugs ausgesandten Lichtbündels**

(57) Der Scheinwerfer (10) weist wenigstens eine Lichtquelle (14) auf, die zumindest zeitweise derart betrieben wird, daß die Intensität des von dieser ausgesandten Lichts zeitlich veränderlich ist. Die Einrichtung dient beispielsweise zur Regelung der Leuchtweite des vom Scheinwerfer (10) ausgesandten Lichtbündels und weist eine Sensoreinrichtung (20) auf, durch die eine Beleuchtungssituation vor dem Fahrzeug in Form des von der Fahrbahn reflektierten Lichts erfaßt wird. Die Sensoreinrichtung (20) ist mit einer Eingangseinheit (44) einer Auswerteeinrichtung (42) verbunden, durch die die von der Sensoreinrichtung (20) erfaßte Beleuchtungssituation auf den die zeitlich veränderliche Intensität aufweisenden Lichtanteil ausgewertet wird und dieser Lichtanteil wird einer Verarbeitungseinheit (46) zugeführt, durch die die aktuelle Beleuchtungssituation mit einer vorgegebenen Soll-Beleuchtungssituation mit korrekt eingestellter Leuchtweite verglichen wird. Bei bestehender Abweichung wird durch die Verarbeitungseinheit ein Ausgangssignal erzeugt, durch das eine dem Scheinwerfer (10) zugeordnete Verstelleinrichtung (18) betätigt wird, durch die die Neigung des Scheinwerfers verstellt wird, bis die korrekte Leuchtweite eingestellt ist.

FIG. 2

EP 0 949 118 A2

## Beschreibung

Stand der Technik

Die Erfindung geht aus von einer Einrichtung zur Einstellung der Richtung des von wenigstens einem Scheinwerfer eines Fahrzeugs ausgesandten Lichtbündels nach der Gattung des Anspruchs 1.

Eine solche Einrichtung ist in Form einer Einrichtung zur Regelung der Leuchtweite des von wenigstens einem Scheinwerfer eines Fahrzeugs ausgesandten Lichtbündels durch die DE 41 22 531 A1 bekannt. Diese Einrichtung weist eine dem Scheinwerfer zugeordnete Verstelleinrichtung auf, durch die die Leuchtweite des Scheinwerfers veränderbar ist. Die Einrichtung weist außerdem wenigstens eine optoelektronische Sensoreinrichtung auf, durch die eine Beleuchtungssituation in Form des vom Scheinwerfer ausgesandten und von der Fahrbahn vor dem Fahrzeug reflektierten Lichts erfaßt. Die Einrichtung weist schließlich auch eine mit der Sensoreinrichtung und der Verstelleinrichtung verbundene Auswerteeinrichtung auf, durch die die von der Sensoreinrichtung erfaßte aktuelle Beleuchtungssituation mit gespeicherten Daten einer Soll-Beleuchtungssituation verglichen wird. Bei bestehender Abweichung zwischen der von der Sensoreinrichtung aktuell erfaßten Beleuchtungssituation und der Soll-Beleuchtungssituation entsprechend den gespeicherten Daten wird von der Auswerteeinrichtung die Verstelleinrichtung derart angesteuert, daß die Abweichung beseitigt oder zumindest minimiert wird. Durch die Sensoreinrichtung wird jedoch nicht nur das vom Scheinwerfer des Fahrzeugs ausgesandte und von der Fahrbahn reflektierte Licht erfaßt sondern auch von anderen Lichtquellen herrührendes und von der Fahrbahn reflektiertes Licht. Dieses Licht kann beispielsweise von Scheinwerfern anderer Fahrzeuge oder von der Straßenbeleuchtung ausgesandt sein und führt zu Ungenauigkeiten der Einstellung der Leuchtweite des Scheinwerfers.

Vorteile der Erfindung

Die erfindungsgemäße Einrichtung zur Einstellung der Richtung des von wenigstens einem Scheinwerfer ausgesandten Lichtbündels hat demgegenüber den Vorteil, daß sich das vom Scheinwerfer des Fahrzeugs ausgesandte Licht durch dessen zeitlich veränderliche Charakteristik von dem von anderen Lichtquellen herrührenden Licht unterscheidet und somit gezielt die von der wenigstens einen Sensoreinrichtung erfaßte Beleuchtungssituation auf diesen Anteil des Lichts ausgewertet wird. Die Einstellung der Richtung des vom Scheinwerfer ausgesandten Lichtbündels kann somit mit großer Genauigkeit erfolgen, da diese nicht durch von anderen Lichtquellen herrührendes Licht beeinflußt wird.

In den abhängigen Ansprüchen sind vorteilhafte Ausgestaltungen und Weiterbildungen der erfindungsgemäßen Einrichtung zur Einstellung der Richtung des von wenigstens einem Scheinwerfer ausgesandten Lichtbündels angegeben. Durch die Ausbildung gemäß Anspruch 3 ist auf einfache Weise eine zeitliche Modulation der Intensität des von der Lichtquelle ausgesandten Lichts ermöglicht. Durch die Ausbildung gemäß Anspruch 8 ist sichergestellt, daß gezielt zumindest im wesentlichen das von der Lichtquelle ausgesandte zeitlich modulierte Licht verarbeitet wird.

Zeichnung

Mehrere Ausführungsbeispiele der Erfindung sind in der Zeichnung dargestellt und in der nachfolgenden Beschreibung näher erläutert. Es zeigen Figur 1 ein Fahrzeug mit Scheinwerfern, durch die die vor dem Fahrzeug liegende Fahrbahn beleuchtet wird, Figur 2 eine Einrichtung zur Regelung der Leuchtweite der Scheinwerfer des Fahrzeugs in einer Prinzipdarstellung, Figur 3 den zeitlichen Verlauf der Intensität des von einer Lichtquelle eines Scheinwerfers ausgesandten konstanten Lichtanteils, Figur 4 den zeitlichen Verlauf der Intensität des von der Lichtquelle ausgesandten veränderlichen Lichtanteils und Figur 5 die Überlagerung der zeitlichen Verläufe des von der Lichtquelle ausgesandten konstanten Lichtanteils und des veränderlichen Lichtanteils.

Beschreibung der Ausführungsbeispiele

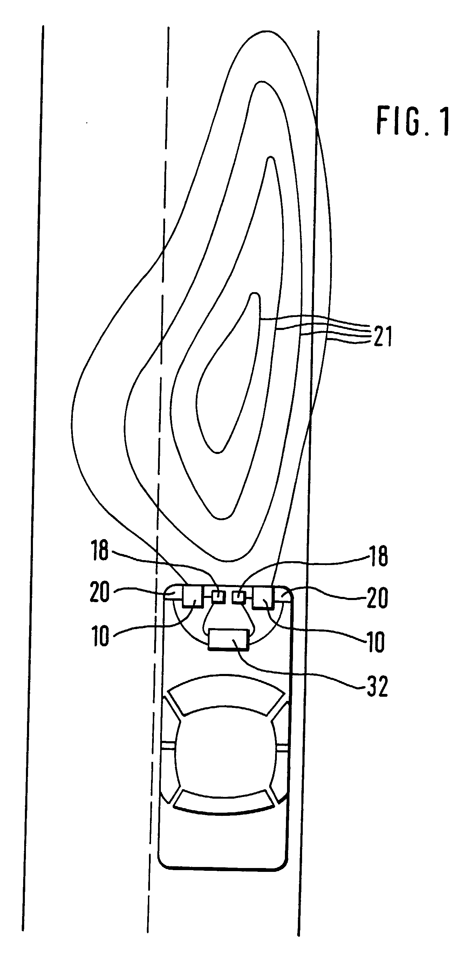

Ein in Figur 1 dargestelltes Fahrzeug, bei dem es sich insbesondere um ein Kraftfahrzeug handelt, weist an dessen Frontende in bekannter Weise zwei Abblendlichtscheinwerfer 10 auf, die an der Karosserie des Fahrzeugs befestigt sind. Die Abblendlichtscheinwerfer 10 können dabei nur zur Erzeugung des Abblendlichts dienen oder als kombinierte Abblendlicht- und Fernlichtscheinwerfer ausgeführt sein, durch die wahlweise das Abblendlicht oder das Fernlicht erzeugt werden kann. Jeder Abblendlichtscheinwerfer 10 weist einen Reflektor 12 auf, in den wenigstens eine Lichtquelle 14 eingesetzt ist. Der Abblendlichtscheinwerfer 10 insgesamt oder zumindest dessen Reflektor 12 ist um eine etwa horizontal verlaufende Achse 16 und/oder um eine etwa vertikal verlaufende Achse 17 verschwenkbar. Durch eine Verschwenkung des Abblendlichtscheinwerfers 10 bzw. von dessen Reflektor 12 um die horizontale Achse 16 kann die Richtung des von diesem ausgesandten Lichtbündels in einer vertikalen Ebene verändert werden und somit die Leuchtweite des vom Abblendlichtscheinwerfer ausgesandten Lichtbündels verändert werden. Durch eine Verschwenkung des Abblendlichtscheinwerfers 10 bzw. von dessen Reflektor 12 um die vertikale Achse 17 kann die Richtung des von diesem ausgesandten Lichtbündels in einer horizontalen Ebene verändert werden und somit der Verlauf des Lichtbündels in seitlicher Richtung verändert werden. Hierdurch kann beispielsweise die Richtung des vom Abblendlichtscheinwerfers 10 ausgesandten Lichtbündels an den Verlauf der Fahrbahn vor dem Fahrzeug angepaßt werden, insbesondere bei Kurvenfahrt, um eine ausreichende Beleuchtung der Fahrbahn zu erreichen.

Nachfolgend wird beispielhaft beschrieben, wie die Einstellung der Richtung des vom Abblendlichtscheinwerfer 10 ausgesandten Lichtbündels in einer vertikalen Ebene und somit die Einstellung der Leuchtweite des vom Abblendlichtscheinwerfer ausgesandten Lichtbündels erfolgt. Jedem Abblendlichtscheinwerfer 10 ist eine Verstelleinrichtung 18 zugeordnet, durch die der gesamte Scheinwerfer oder zumindest dessen Reflektor 12 um die Achse 16 verschwenkbar ist. Die Verstelleinrichtungen 18 können insbesondere einen Elektromotor als Antrieb aufweisen, der über ein Getriebe ein am Scheinwerfer 10 oder dessen Reflektor 12 angelenktes Verstellelement bewegt. Alternativ können die Verstelleinrichtungen 18 auch hydraulisch, pneumatisch oder elektromagnetisch betätigt werden.

Beim Betrieb der Abblendlichtscheinwerfer 10 werden durch diese Lichtbündel ausgesandt, die den Bereich vor dem Fahrzeug beleuchten. In Figur 1 sind die Lichtbündel anhand mehrerer Linien gleicher Beleuchtungsstärke, sogenannter Isoluxlinien 20 verdeutlicht. Die Lichtbündel weisen auf der eigenen Verkehrsseite, bei der dargestellten Ausführung für Rechtsverkehr der rechten Verkehrsseite, eine größere Reichweite auf als auf der Gegenverkehrsseite. Durch die Anordnung der Abblendlichtscheinwerfer 10 an der Karosserie des Fahrzeugs ändert sich die Neigung der Abblendlichtscheinwerfer 10 bezüglich der Fahrbahn mit der Änderung der Neigung der Karosserie des Fahrzeugs. Eine Änderung der Neigung der Karosserie des Fahrzeugs tritt beispielsweise bei wechselnder Beladung des Fahrzeugs, bei Beschleunigungs- oder Bremsvorgängen des Fahrzeugs oder beim Überfahren vonn Fahrbahnunebenheiten auf. Die Änderung der Neigung der Abblendlichtscheinwerfer 10 führt auch zu einer Änderung von deren Leuchtweite in dem Sinne, daß bei Einfederung des Fahrzeugs an der Hinterachse die Leuchtweite vergrößert wird und bei Einfederung des Fahrzeugs an der Vorderachse die Leuchtweite verringert wird. Eine Vergrößerung der Leuchtweite führt zu einer Blendung des Gegenverkehrs während eine Verringerung der Leuchtweite dazu führt, daß die Sichtweite des Fahrzeuglenkers verringert wird. Um die durch die Neigungsänderung der Karosserie des Fahrzeugs bewirkte Änderung der Leuchtweite der Abblendlichtscheinwerfer 10 auszugleichen ist eine Einrichtung zur Regelung der Leuchtweite vorgesehen, durch die die Leuchtweite zumindest annähernd konstant gehalten wird und die nachfolgend näher erläutert wird.

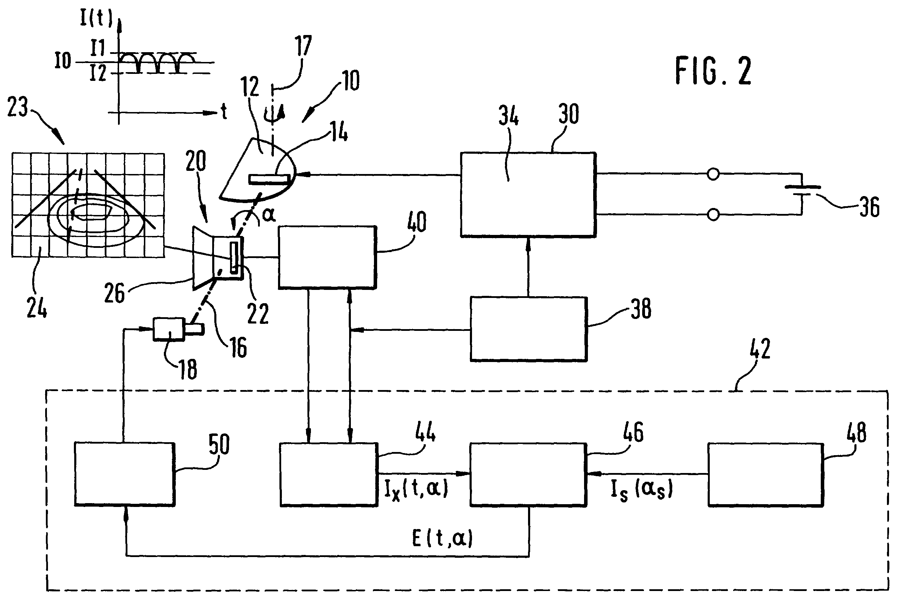

Eine vereinfachte Prinzipdarstellung der Einrichtung zur Regelung der Leuchtweite ist in Figur 2 dargestellt. Die Einrichtung weist wenigstens eine optoelektronische Sensoreinrichtung 20 auf. Es kann vorgesehen sein, daß für beide Abblendlichtscheinwerfer 10 nur eine gemeinsame Sensoreinrichtung 20 vorhanden ist oder daß für jeden Abblendlichtscheinwerfer 10 eine eigene Sensoreinrichtung 20 vorhanden ist. Durch die Sensoreinrichtung 20 wird die Beleuchtungssituation vor dem Fahrzeug in Form des von der Fahrbahn vor dem Fahrzeug reflektierten Lichts erfaßt. Die Sensoreinrichtung 20 weist mehrere diskrete lichtempfindliche Elemente 22 auf, die beispielsweise als Fotozellen, Fotodioden, Fototransistoren oder CCD (Charge Coupled Device) ausgebildet sind. Die lichtempfindlichen Elemente 22 sind matrixartig oder linear verteilt angeordnet. Die Sensoreinrichtung 20 kann auch nur ein lichtemfindliches Element aufweisen, das eine eindimensionale, lineare Ausdehnung oder eine zweidimensionale, flächige Ausdehnung aufweist, wobei für Teilbereiche des Elements getrennt das auf diese treffende Licht erfaßt werden kann. Das lichtempfindliche Element kann dabei als PSD (Photo-Sensing-Device) ausgebildet sein. Die Abbildung 23 der Beleuchtungssituation wird in mehrere Teilbereiche 24 rasterartig unterteilt, wobei durch die Sensoreinrichtung 20 die in jedem Teilbereich 24 vorhandene Beleuchtungsstärke erfaßt wird. Die Sensoreinrichtung 20 weist außerdem eine Abbildungsoptik beispielsweise in Form eines Objektivs 26 auf, durch die einfallendes Licht auf das oder die lichtempfindlichen Elemente 22 abgebildet wird. Die für die verschiedenen Teilbereiche 24 erfaßten Beleuchtungsstärken können in zeitlicher Abfolge nacheinander für die diesen Teilbereichen 24 zugeordneten lichtempfindlichen Elemente 22 aus der Sensoreinrichtung 20 ausgelesen werden. Wenn die lichtempfindlichen Elemente 22 linear angeordnet sind, so werden diese zur Ermittlung der Beleuchtungsstärken in den einzelnen Teilbereichen 24 bewegt, um eine Erfaßung aller Teilbereiche 24 der Abbildung 23 zu ermöglichen. Es kann dabei in jeder Stellung der Elemente 22 für in einer Zeile oder einer Spalte angeordnete Teilbereiche 24 der Lichteinfall erfaßt werden und dann werden die Elemente 22 weiterbewegt, so daß für in einer benachbarten Zeile oder Spalte angeordnete Teilbereiche 24 der Lichteinfall erfaßt werden kann. Die Sensoreinrichtung 20 ist vorzugsweise am Abblendlichtscheinwerfer 10 derart angeordnet, daß diese zusammen mit dem Abblendlichtscheinwerfer 10 oder dessen Reflektor 12 durch die Verstelleinrichtung 18 um die Achse 16 verschwenkbar ist.

Die Lichtquelle 14 des Abblendlichtscheinwerfers 10 ist vorzugsweise eine Entladungslampe, für deren Betrieb eine elektrische Vorschalteinrichtung 30 vorhanden ist. Die Vorschalteinrichtung 30 weist eine Zündeinrichtung auf, durch die die zum Starten der Entladungslampe 14 notwendige Hochspannung erzeugt wird. Die Vorschalteinrichtung 30 weist außerdem eine Betriebseinrichtung 32 für den Dauerbetrieb der Entladungslampe 14 auf, die unter anderem einen Wandler 34 aufweist, durch den aus dem von der Bordbatterie 36 des Fahrzeugs zur Verfügung gestellten Gleichstrom und der Gleichspannung ein Wechselstrom und eine Wechselspannung erzeugt werden, die der Entladungslampe 14 zugeführt werden.

Mit der Betriebseinrichtung 32, insbesondere mit deren Wandler 34, ist eine Steuereinrichtung 38 verbunden, durch die der Verlauf des durch den Wandler 34 der Entladungslampe 14 zugeführten elektrischen Wechselstroms und der Wechselspannung zumindest zeitweise beeinflußt wird. Der Verlauf des der Entladungslampe 14 zugeführten elektrischen Stroms und der Spannung beziehungsweise der zugeführten elektrischen Leistung wird durch die Steuereinrichtung 38 zumindest zeitweise zeitabhängig verändert, so daß entsprechend die Intensität des von der Entladungslampe 14 ausgesandten Lichts in zeitlicher Abhängigkeit in durch die Steuereinrichtung 38 vorgegebener charakteristischer Weise verändert wird. Vorzugsweise wird durch den Wandler 34 der Entladungslampe 14 ein Wechselstrom oder eine Wechselspannung mit einer bestimmten Grundfrequenz und einer bestimmten Grundamplitude zugeführt wie sie für den stabilen Betrieb der Entladungslampe 14 geeignet sind. Durch die Steuereinrichtung 38 wird dann der der Entladungslampe 14 zugeführte Wechselstrom und/oder die Wechselspannung mit einer bestimmten Frequenz und/oder Amplitude und/oder Phase ausgehend von der Grundfrequenz und der Grundamplitude zeitlich verändert. Dabei ist vorzugsweise die Grundfrequenz und die Grundamplitude größer als die durch die Steuereinrichtung 38 bewirkte zeitliche Änderung der Frequenz und Amplitude des Wechselstroms und/oder der Wechselspannung.

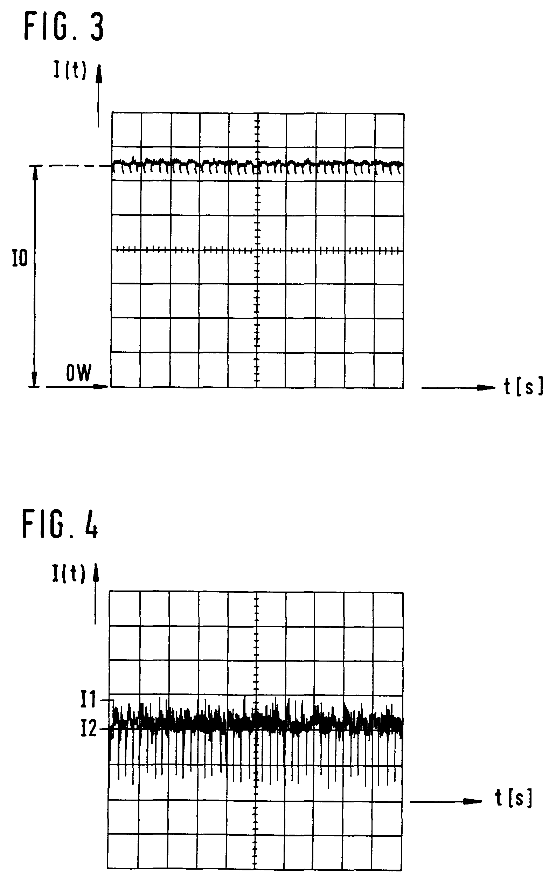

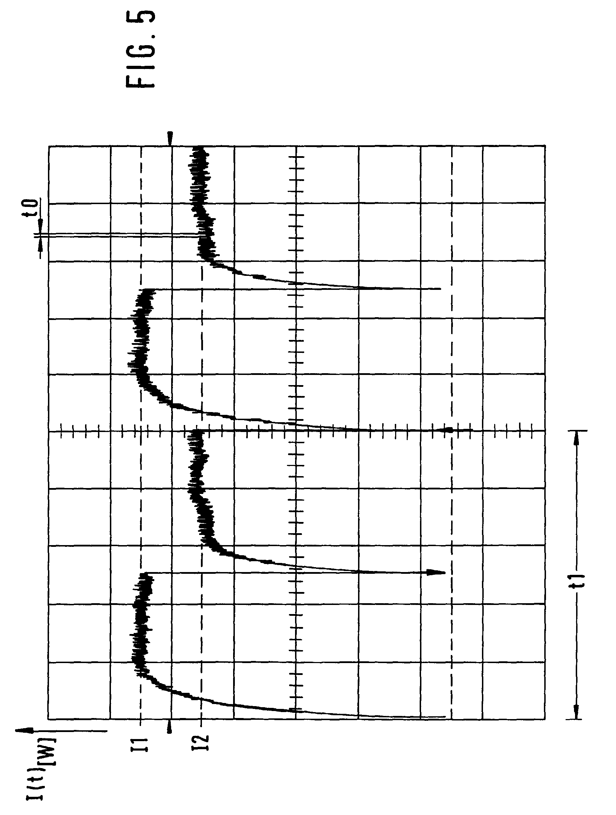

In Figur 3 ist der zeitliche Verlauf der Intensität I(t) des von der Entladungslampe 14 ausgesandten Lichts dargestellt, wenn der Entladungslampe 14 ein Wechselstrom und/oder eine Wechselspannung mit konstanter Grundfrequenz und konstanter Grundamplitude zugeführt wird. Die Intensität I(t) schwankt dabei entsprechend der Grundfrequenz des Stroms oder der Spannung um einen Mittelwert I0, der durch die Amplitude des zugeführten Stroms bzw. der Spannung bestimmt ist. In Figur 4 ist der zeitliche Verlauf der Intensität I(t) des von der Entladungslampe 14 ausgesandten Lichts dargestellt bei durch die Steuereinrichtung 38 bewirkter zeitlicher Änderung. Die Intensität I(t) gemäß Figur 4 ändert sich mit einer geringeren Frequenz als der Grundfrequenz. In Figur 5 ist der zeitliche Verlauf der Intensität I(t) mit größerer zeitlicher Auflösung dargestellt, wobei die Änderungen der Intensität I(t) mit der Grundfrequenz f0 und der Frequenz f1 einander überlagert sind. In Figur 5 sind die Periodendauer t0 der Grundfrequenz f0 und die Periodendauer t1 der durch die Steuereinrichtung 38 bewirkten Frequenz f1 eingetragen. Während einer Periodendauer t1 der Frequenz f1 liegen mehrere Periodendauern t0 der Grundfrequenz f0.

Die Amplitude Imax der Intensität I(t) wird durch die Steuereinrichtung 38 mit der Frequenz f1 zwischen einem ersten höheren Wert I1 und einem zweiten geringeren Wert I2 verändert. Zwischen den beiden Werten I1 und I2 kann die Intensität I(t) während sehr kurzer Zeitintervalle bis auf Null abnehmen. Die Frequenz f1 der durch die Steuereinrichtung 38 bewirkten zeitlichen Änderung der Intensität I(t) kann konstant sein oder zeitlich veränderlich. Ebenso kann die Differenz der Amplituden I1 und I2 konstant oder zeitlich veränderlich sein. Um eine charakteristische zeitabhängige Änderung der Intensität I(t) des von der Entladungslampe 14 ausgesandten Lichts zu erreichen kann durch die Steuereinrichtung 38 auch beispielsweise eine Phasenmodulation der Wechselspannung und des Wechselstroms bewirkt werden, die der Entladungslampe 14 zugeführt werden.

Mit der Steuereinrichtung 38 ist eine Takteinrichtung 40 verbunden, mit der auch die Sensoreinrichtung 20 verbunden ist. Durch die Takteinrichtung 40 wird der Betrieb der Sensoreinrichtung 20 mit der zeitlichen Änderung der Charakteristik des von der Entladungslampe 14 ausgesandten Lichts synchronisiert, das heißt, daß durch die Sensoreinrichtung 20 in den Zeiträumen, in denen durch die Steuereinrichtung 38 die Intensität des von der Entladungslampe 14 ausgesandten Lichts in der charakteristischen Weise moduliert wird, die Beleuchtungssituation vor dem Fahrzeug erfaßt wird. Die Sensoreinrichtung 20 wird synchron mit der zum jeweiligen Zeitpunkt vorhandenen zeitlich veränderlichen Charakteristik der Intensität des von der Entladungslampe 14 ausgesandten Lichts betrieben. Durch die Takteinrichtung 40 kann auch die Bewegung des oder der linear angeordneten lichtempfindlichen Elemente 22 der Sensoreinrichtung 20 gesteuert werden, die erforderlich ist, um den Lichteinfall in allen Teilbereichen 24 der Abbildung 23 der Beleuchtungssituation zu erfassen.

Die Sensoreinrichtung 20 ist mit einer Auswerteeinrichtung 42 verbunden, die nachfolgend erläutert wird. Die Auswerteeinrichtung 42 weist eine Eingangseinheit 44 auf, die mit der Sensoreinrichtung 20 und mit der Takteinrichtung 40 verbunden ist. Die Eingangseinheit 44 ist wiederum mit einer Verarbeitungseinheit 46 verbunden. Durch die Eingangseinheit 44 werden die von der Sensoreinrichtung 20 gelieferten Signale in Synchronisation mit der durch die Steuereinrichtung 38 bewirkten zeitlichen Änderung der Intensität des von der Entladungslampe 14 ausgesandten Lichts an die Verarbeitungseinheit 46 weitergeleitet. Die Synchronisation der Weiterleitung der Signale der Sensoreinrichtung 20 an die Verarbeitungseinheit 46 durch die Eingangseinheit 44 wird durch deren Verbindung mit der Takteinrichtung 40 sichergestellt. Durch die Weiterleitung der Signale der Sensoreinrichtung 20 in Synchronisation mit der zeitlichen Änderung der Intensität des von der Entladungslampe 14 ausgesandten Lichts wird erreicht, daß der Anteil des von der Sensoreinrichtung 20 erfaßten Lichts verstärkt wird, der von der Entladungslampe 14 stammt und im wesentlichen nur dieser Lichtanteil verarbeitet wird. Von anderen Lichtquellen, beispielsweise von Scheinwerfern anderer Fahrzeuge oder der Straßenbeleuchtung, herrührendes Fremdlicht, ist nicht in Synchronisation bzw. statistisch korreliert mit der zeitlichen Änderung der Intensität des von der Entladungslampe 14 ausgesandten Lichts und wird daher von der Eingangseinheit 44 ausgefiltert und nicht oder nur zu einem geringen Anteil an die Verarbeitungseinheit 46 weitergeleitet. Von der Eingangseinheit 44 wird somit eine Abbildung der Beleuchtungssituation vor dem Fahrzeug an die Verarbeitungseinheit 46 weitergeleitet, in der zumindest im wesentlichen nur der Anteil der Beleuchtung enthalten ist, der durch das vom Scheinwerfer 10 stammende Licht bewirkt wird.

Die Verarbeitungseinheit 46 ist außer mit der Eingangseinheit 44 auch mit einer Speichereinheit 48 verbunden, in der Daten zu wenigstens einer Abbildung der Beleuchtungssituation vor dem Fahrzeug gespeichert sind, wie sie bei korrekt eingestellter Leuchtweite des Scheinwerfers 10 vorhanden ist. In den Teilbereichen 24 der Abbildung 23 der Beleuchtungssituation vor dem Fahrzeug sind bei korrekt eingestellter Leuchtweite bestimmte Beleuchtungsstärken vorhanden und es ist eine bestimmte Verteilung der Beleuchtungsstärke über die verschiedenen Teilbereiche 24 vorhanden. In der Speichereinheit 48 können Daten verschiedener Abbildungen der Beleuchtungssituation vor dem Fahrzeug gespeichert sein, wie sie von der Sensoreinrichtung 20 beispielsweise bei unterschiedlichen Witterungsbedingungen, bei trockener oder nasser Fahrbahn oder bei verschiedenen Fahrbahnbelägen erfaßt werden. Die in der Speichereinheit 48 gespeicherten Daten werden bei realer Beleuchtung der Fahrbahn vor dem Fahrzeug durch den Scheinwerfer 10 und Erfaßung der Beleuchtungssituation durch die Sensoreinrichtung 20 ermittelt.

Durch die Verarbeitungseinheit 46 werden die an diese von der Eingangseinheit 44 weitergeleiteten aktuellen Daten Ix(t,$\alpha$) der von der Sensoreinrichtung 20 erzeugten Abbildung der Beleuchtungssituation mit den in der Speichereinheit 48 vorhandenen Daten Is($\alpha$s) verglichen. Die aktuellen Daten Ix sind abhängig von der Zeit t und dem Neigungswinkel des Scheinwerfers 10 bzw. von dessen Reflektor 12 bezüglich der Fahrbahn und die Daten Is stellen einen Sollwert dar. Beim Vergleich der Daten wird durch die Verarbeitungseinheit 46 die Differenz E(t,$\alpha$) = Is($\alpha$s) - Ix(t,$\alpha$) gebildet, die ein Maß für die Abweichung der aktuellen Leuchtweite von der Soll-Leuchtweite ist. Die Differenz E(t,$\alpha$) ist abhängig vom Neigungswinkel $\alpha$(t) des Scheinwerfers 10 bezüglich der Fahrbahn, der wiederum abhängig ist von der Zeit t. Zur Ermittlung der Differenz E(t,$\alpha$) werden durch die Verarbeitungseinheit 46 bekannte Verfahren der Korrelation angewandt.

Durch die Verarbeitungseinheit 46 wird ein Ausgangssignal gebildet, durch das über eine Korrektureinheit 50 die Verstelleinrichtung 18 des Scheinwerfers 10 angesteuert wird. Das Ausgangssignal der Verarbeitungseinheit 46 ist derart, daß die Verstelleinrichtung 18 in der Weise betätigt wird, daß die Neigung $\alpha$ des Scheinwerfers 10 bzw. von dessen Reflektor 12 derart verändert wird, damit das vom Scheinwerfer 10 ausgesandte Lichtbündel die vorgegebene Soll-Leuchtweite aufweist und somit die von der Verarbeitungseinheit 46 ermittelte Differenz E(t,$\alpha$) zu Null wird oder zumindest minimiert wird. Bei der Verschwenkung des Scheinwerfers 10 bzw. von dessen Reflektor 12 wird auch die Sensoreinrichtung 20 um die Achse 16 mitverschwenkt.

Der Korrektureinheit 50 können neben dem Ausgangssignal der Verarbeitungseinheit 46 noch weitere Signale zugeführt werden, beispielsweise über die Witterungsbedingungen wie Regen oder Nebel, und/oder über die Geschwindigkeit des Fahrzeugs, und/oder über die Beschleunigung des Fahrzeugs, und/oder über die Drehzahl des Motors des Fahrzeugs und/oder Signale einer Steuerung eines automatischen Getriebes des Fahrzeugs. Durch die Korrektureinheit 50 erfolgt eine Prüfung des Ausgangssignals der Verarbeitungseinheit 46 auf Plausibilität, das heißt, ob unter Beachtung der der Korrektureinheit 50 infolge der zusätzlichen Signale vorliegenden Informationen das Ausgangssignal zur Ansteuerung der Verstelleinrichtung 18 zu einer korrekten Einstellung der Leuchtweite führen kann. Durch die Korrektureinheit 50 kann auch die Zuverlässigkeit des Ausgangssignals der Verarbeitungseinheit 46 unter Berücksichtignng der vorliegenden zusätzlichen Informationen, beispielsweise den Witterungsbedingungen, eingeschätzt werden und abhängig von der Zuverlässigkeit korrigiert werden. In der Korrektureinheit 50 können hierzu beispielsweise Verfahren mit unscharfer Logik, sogenannte Fuzzy-Logik, verwendet werden.

Die durch die Steuereinrichtung 38 bewirkte zeitliche Änderung der Intensität des von der Entladungslampe 14 ausgesandten Lichts ist vorzugsweise in ihrer Amplitude und Frequenz derart, daß diese vom menschlichen Auge nicht wahrnehmbar ist und somit die Beleuchtung der Fahrbahn für den Fahrzeuglenker nicht beeinträchtigt wird. Es kann vorgesehen sein, daß bei jedem Abblendlichtscheinwerfer 10 die Intensität des von dessen Lichtquelle 14 ausgesandten Lichts moduliert wird und daß jedem Abblendlichtscheinwerfer 10 eine Sensoreinrichtung 20 und eine Auswerteeinrichtung 42 zugeordnet ist, wobei somit bei beiden Abblendlichtscheinwerfer unabhängig voneinander deren Leuchtweite einstellbar ist. Alternativ kann vorgesehen sein, daß beiden Abblendlichtscheinwerfern 10 jeweils eine Sensoreinrichtung 20 zugeordnet ist, die mit einer gemeinsamen Auswerteeinrichtung 32 verbunden sind. Weiterhin alternativ kann auch vorgesehen sein, daß nur bei einem Abblendlichtscheinwerfer 10 die Intensität des von dessen Lichtquelle 14 ausgesandten Lichts moduliert wird und nur diesem Abblendlichtscheinwerfer 10 eine Sensoreinrichtung 20 und eine Auswerteeinrichtung 42 zugeordnet ist. Dabei kann die Verstelleinrichtung 18 des anderen Abblendlichtscheinwerfers 10 über das Ausgangssignal der Auswerteeinrichtung 42 mit angesteuert werden. In diesem Fall muß jedoch sichergestellt sein, daß die Neigungswinkel $\alpha$ beider Abblendlichtscheinwerfer 10 gleich sind.

Anstelle der Entladungslampe 14 kann der Abblendlichtscheinwerfer 10 auch eine oder mehrere andere Lichtquellen aufweisen, beispielsweise Halbleiterlichtquellen in Form von Leuchtdioden, bei denen die Intensität des von diesen ausgesandten Lichts durch eine Steuereinrichtung 38 beeinflußt werden kann. Analog zu der vorstehend erläuterten Einstellung der Leuchtweite des vom Abblendlichtscheinwerfer 10 ausgesandten Lichtbündels kann zusätzlich oder alternativ zur Einstellung der Leuchtweite mittels der Sensoreinrichtung 20, der Auswerteeinrichtung 42 und der Steuereinrichtung 30 über eine weitere Verstelleinrichtung, durch die der Abblendlichtscheinwerfer 10 bzw. zumindest dessen Reflektor 12 um die vertikale Achse 17 verschwenkbar ist, auch die Richtung des vom Abblendlichtscheinwerfer ausgesandten Lichtbündels in einer horizontalen Ebene eingestellt werden. Die Auswerteeinrichtung 42 kann dabei beispielsweise mit einer weiteren Sensoreinrichtung verbunden sein, durch die der Verlauf der Fahrbahn vor dem Fahrzeug erfaßt wird, so daß die Richtung des vom Abblendlichtscheinwerfer 10 ausgesandten Lichtbündels entsprechend dem Fahrbahnverlauf angepaßt werden kann. Als Sensoreinrichtung kann hier beispielsweise auch eine Satelliten-Navigationseinrichtung des Fahrzeugs dienen, in der Daten über den Fahrbahnverlauf gespeichert sind und durch die der momentane Aufenthaltsort des Fahrzeugs auf der Fahrbahn erfaßt wird.

## Patentansprüche

1. Einrichtung zur Einstellung der Richtung des von wenigstens einem Scheinwerfer eines Fahrzeugs ausgesandten Lichtbündels, wobei der Scheinwerfer (10) wenigstens eine Lichtquelle (14) aufweist, mit einer dem Scheinwerfer (10) zugeordneten Verstelleinrichtung (18), durch die die Richtung des vom Scheinwerfer (10) ausgesandten Lichtbündels veränderbar ist, mit wenigstens einer optoelektronischen Sensoreinrichtung (20), durch die eine Beleuchtungssituation in Form des von dem Scheinwerfer (10) ausgesandten und von der Fahrbahn vor dem Fahrzeug reflektierten Lichts erfaßt wird, und mit einer Auswerteeinrichtung (42) durch die die von der Sensoreinrichtung (20) erfaßte aktuelle Beleuchtungssituation mit wenigstens einer gespeicherten Soll-Beleuchtungssituation mit korrekt eingestellter Richtung des vom Scheinwerfer (10) ausgesandten Lichtbündels verglichen wird und bei bestehender Abweichung zwischen der aktuellen Beleuchtungssituation und der Soll-Beleuchtungssituation die Verstelleinrichtung (18) zur Minimierung der Abweichung angesteuert wird, dadurch gekennzeichnet, daß zumindest zeitweise die Lichtabgabe des Scheinwerfers (10) zeitlich moduliert wird und daß durch die Auswerteeinrichtung (42) zumindest im wesentlichen nur der zeitlich modulierte Anteil der von der Sensoreinrichtung (20) erfaßten aktuellen Beleuchtungssituation ausgewertet wird.

2. Einrichtung nach Anspruch 1, dadurch gekennzeichnet, daß die Intensität des von der wenigstens einen Lichtquelle (14) ausgesandten Lichts zeitlich moduliert wird.

3. Einrichtung nach Anspruch 2, dadurch gekennzeichnet, daß für die wenigstens eine Lichtquelle (14) eine elektrische Versorgungseinrichtung (30) vorgesehen ist und daß zur zeitlichen Modulation der Intensität des von der Lichtquelle (14) ausgesandten Lichts wenigstens eine elektrische Betriebsgröße der Versorgungseinrichtung (30) zeitlich moduliert wird.

4. Einrichtung nach Anspruch 3, dadurch gekennzeichnet, daß als Betriebsgröße der elektrischen Versorgungseinrichtung (30) der durch diese der Lichtquelle (14) zugeführte Strom zeitlich moduliert wird.

5. Einrichtung nach Anspruch 3 oder 4, dadurch gekennzeichnet, daß als Betriebsgröße der elektrischen Versorgungseinrichtung (30) die durch diese der Lichtquelle (14) zugeführte Spannung zeitlich moduliert wird.

6. Einrichtung nach einem der Ansprüche 3 bis 5, dadurch gekennzeichnet, daß eine Steuereinrichtung (38) vorgesehen ist, die zur Bewirkung der zeitlichen Modulation der wenigstens einen elektrischen Betriebsgröße auf die Versorgungseinrichtung (30) einwirkt.

7. Einrichtung nach einem der Ansprüche 2 bis 6, dadurch gekennzeichnet, daß die wenigstens eine Lichtquelle (14) mit einer bestimmten Grundintensität (IO) betrieben wird, der zumindest zeitweise eine zeitliche Änderung der Intensität (I(t)) überlagert wird.

8. Einrichtung nach einem der vorstehenden Ansprüche, dadurch gekennzeichnet, daß die Erfaßung der Beleuchtungssituation durch die wenigstens eine Sensoreinrichtung (20) und deren Verarbeitung durch die Auswerteeinrichtung (42) synchron mit der zeitlichen Modulation der Lichtabgabe des Scheinwerfers (10) erfolgt.

9. Einrichtung nach einem der vorstehenden Ansprüche, dadurch gekennzeichnet, daß die wenigstens eine Lichtquelle (14) eine Entladungslampe ist.

10. Einrichtung nach einem der Ansprüche 1 bis 8, dadurch gekennzeichnet, daß die wenigstens eine Lichtquelle (14) eine Halbleiterlichtquelle ist.

FIG.1

FIG. 2

EP 0 949 118 A2

FIG. 3

FIG. 4

FIG. 5